# EUROPÄISCHE PATENTSCHRIFT

(11) **EP 2 563 617 B1**
(45) Veröffentlichungstag und Bekanntmachung des Hinweises auf die Patenterteilung: **16.04.2014**
(21) Anmeldenummer: 11703399.3
(22) Anmeldetag: 05.02.2011
(51) Int. Cl.: B60N 2/36

(54) **BESCHLAG FÜR EINEN FAHRZEUGSITZ**
FITTING FOR A VEHICLE SEAT
FERRURE POUR SIÈGE DE VÉHICULE

(30) Priorität: 29.04.2010 DE 102010019361
(43) Veröffentlichungstag der Anmeldung: 06.03.2013
(73) Patentinhaber: Keiper GmbH & Co. KG, 67657 Kaiserslautern (DE)
(72) Erfinder: STILLEKE, Martin, 45657 Recklinghausen (DE); JOKIEL, Christian, 42579 Heiligenhaus (DE); HENKEL, Dieter, 42897 Remscheid (DE); STEMMER, Jürgen, 42897 Remscheid (DE)
(74) Vertreter: Liedhegener, Ralf
(86) Internationale Anmeldenummer: PCT/EP2011/000543
(87) Internationale Veröffentlichungsnummer: WO 2011/134558

(56) Entgegenhaltungen:
- US-A1- 2002 091 029
- US-A1- 2006 279 121

## Beschreibung

Die Erfindung betrifft einen Beschlag für einen Fahrzeugsitz mit den Merkmalen des Oberbegriffs des Anspruches 1.

Ein Beschlag dieser Art ist aus der DE 44 36 101 A1 bekannt. Die Abwälzbewegung definiert Zylinderkoordinaten. Die Keilsegmente weisen jeweils eine in Umfangsrichtung einander zugekehrte Breitseite, eine in Umfangsrichtung voneinander abgewandte Schmalseite, eine konvex gekrümmte, radial nach außen weisende Außenfläche, eine konkav gekrümmte, radial nach innen weisende Innenfläche und zwei zueinander parallele Seitenflächen auf. Die Innenfläche liegt an einem Kragen des ersten Beschlagteils an, während die Außenfläche an einer Gleitlagerbuchse des zweiten Beschlagteils anliegt. Die Seitenflächen schließen jeweils mit einer Kante an die Außenfläche und an die Innenfläche an.

Die US 2006/0279121 A1 offenbart Keilsegmente, deren Kanten eine Fase mit konstanter Geometrie über die Umfangsrichtung aufweisen. Solche gleichmäßigen Fasen erleichtern die Montage der Keile, bewirken jedoch eine erhöhte Flächenpressung in den in radialer Richtung an benachbarten Bauteilen anliegenden Keilflächen, was sich negativ auf die Festigkeit des Beschlages auswirken kann.

Aus der US 2002/0091029 A1 sind Keilsegmente bekannt, die einen Topf zur Aufnahme einer in axialer Richtung wirkenden Feder aufweisen. Die in Umfangsrichtung verlaufenden Kanten weisen keine Fase auf.

Der Erfindung liegt die Aufgabe zu Grunde, einen alternativen Beschlag zum Beschlag der eingangs genannten Art zu schaffen. Diese Aufgabe wird erfindungsgemäß durch einen Beschlag mit den Merkmalen des Anspruches 1 gelöst. Vorteilhafte Ausgestaltungen sind Gegenstand der Unteransprüche.

Gegenüber Keilsegmenten, bei denen die Seitenflächen mit einer (kreisbogenförmig gekrümmten) Kante an die Innenfläche und/oder Außenfläche anschließen, reduziert das Vorsehen des erfindungsgemäßen Übergangsbereichs die Breite der Innenfläche oder Außenfläche gegenüber dem Abstand der Seitenflächen, also der vorherrschenden axialen Abmessung des Keilsegments. Der Fachmann würde annehmen, dass dann aufgrund der reduzierten Fläche, auf welcher sich das Keilsegment abstützt, die statische Festigkeit des Beschlags reduziert ist. Gleichwohl ergab die Untersuchung der Erfindung, dass dieses bislang bestehende Vorurteil nicht zutrifft, wenn der Übergangsbereich eine Fase umfasst, die entlang der Umfangsrichtung ungleichförmig ausgebildet ist. Durch den erfindungsgemäßen Übergangsbereich wird überraschenderweise eine Steigerung der statischen Festigkeit erreicht. Der Übergangsbereich ist als Fase mit oder ohne Stufe ausgebildet, so dass sich eine terrassierte Form des Keilsegments bildet. Der Übergangsbereich des Keilsegments reduziert über einen Bereich von beispielsweise bis zu etwa 1/3 der radialen Abmessung des Keilsegments die lokale axiale Abmessung des Keilsegments vom Abstand der Seitenflächen beispielsweise bis zu etwa 1/3 auf die Breite der Innenfläche und/oder Außenflächen.

Die Fase kann hinsichtlich ihrer Form als flächiges Gebilde (zweidimensionale Mannigfaltigkeit) vorzugsweise ein Teil einer Mantelfläche eines schräg (zur Krümmungsachse der Innenfläche oder Außenfläche) stehenden Zylinders sein, so dass die Fase sichelförmig ausgebildet ist, d.h. in ihrer Mitte eine größere Abmessung in radialer Richtung als an den beiden Enden aufweist. Es kann zusätzlich eine Stufe zwischen Fase und Innenfläche oder Außenfläche vorgesehen sein, welche die Abmessung der Fase in axialer Richtung begrenzt, um trotz großer Abmessung der Fase in der Mitte die Innenfläche oder Außenfläche nicht zu sehr zu reduzieren.

Die Verwendung eines Exzenterumlaufgetriebes zwischen dem ersten Beschlagteil und dem zweiten Beschlagteil erlaubt eine stufenlose Neigungseinstellung der Lehne. Die Einsparung eines zentralen Ritzels gegenüber einem Planetenumlaufgetriebe führt zur Entstehung einer Taumelbewegung, die der relativen Drehung der Beschlagteile überlagert ist. Das Exzenterumlaufgetriebe kann manuell oder motorisch angetrieben werden.

Der Grundanteil beim Sperren des Exzenterumlaufgetriebes wird durch die Reibung zwischen dem Exzenter und einem der beiden Beschlagteile aufgebracht, vorzugsweise dem zweiten Beschlagteil, welches vorzugsweise einen Kragen zum Abstützen des Exzenters aufweist. Die Keilsegmente, welche den Exzenter definieren, dienen sowohl dem Sperren als auch dem Antreiben der Abwälzbewegung von Zahnrad und Zahnkranz. Ein vorzugsweise zusätzlich vorgesehenes Sperrelement dient dem Sperren des Beschlags unter dynamischen Belastungen.

Die Ausbildung des Zahnkranzes an dem den Exzenter aufnehmenden ersten Beschlagteil und die Ausbildung des Zahnrades an dem den Exzenter abstützenden zweiten Beschlagteil spart Material und Bauraum, indem das Zahnrad am radial äuβeren Rand des zweiten Beschlagteils ausgebildet werden kann (welches dann der am ersten Beschlagteil befestigte Umklammerungsring übergreift) und trotzdem ausreichend große Verbindungsbereiche am zweiten Beschlagteil zur Montage des Beschlags zur Verfügung stehen.

Die Erfindung ist vorzugsweise zur Neigungseinstellung der Lehne von Fahrzeugsitzen in Kraftfahrzeugen einsetzbar, kann aber auch für andere Einsatzzwecke verwendet werden.

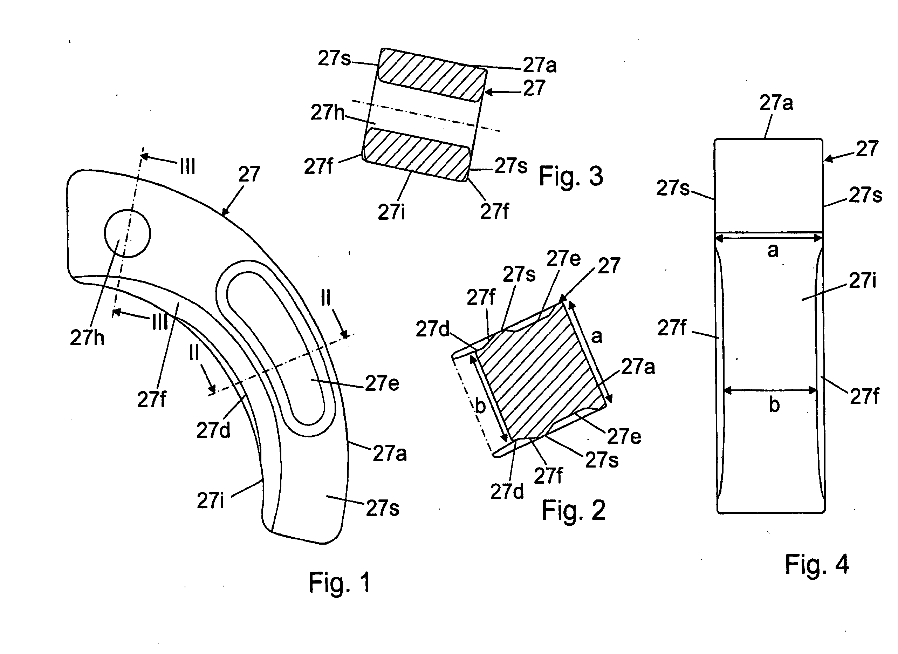

Im folgenden ist die Erfindung anhand eines in der Zeichnung dargestellten Ausführungsbeispiels näher erläutert. Es zeigen
- Fig. 1: eine Seitenansicht eines Keilsegments,
- Fig. 2: einen Schnitt entlang der Linie II-II in Fig. 1,
- Fig. 3: einen Schnitt entlang der Linie III-III in Fig. 1,
- Fig. 4: eine weitere Seitenansicht des Keilsegments mit Blick in Richtung des Pfeiles IV in Fig. 1,

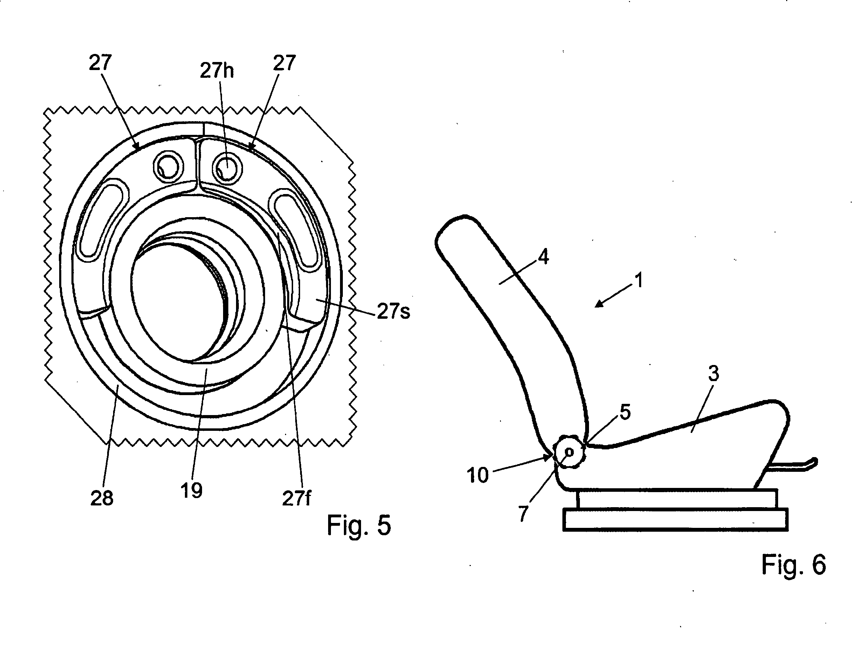

- Fig. 5: eine Teilansicht des Beschlags im Bereich der Keilsegmente ohne Mitnehmer und ohne Feder,
- Fig. 6: eine schematische Darstellung eines Fahrzeugsitzes, und

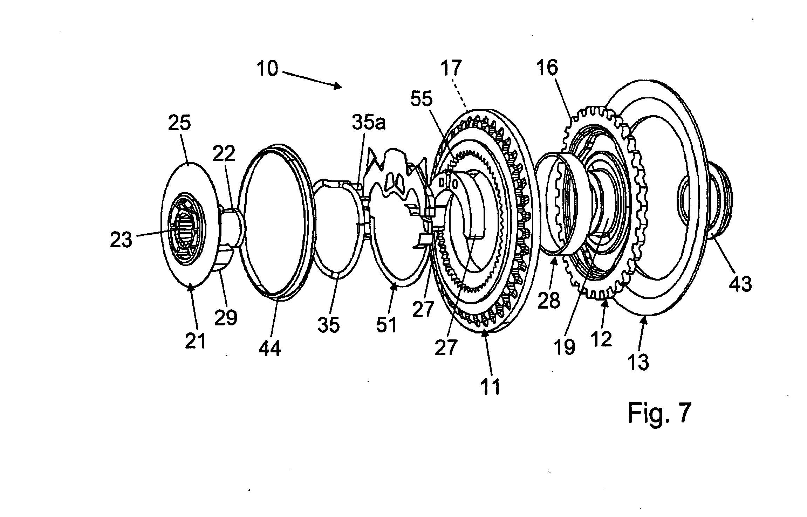

- Fig. 7: eine Explosionsdarstellung des Beschlags mit schematisierten Keilsegmenten.

Ein Fahrzeugsitz 1 für ein Kraftfahrzeug weist ein Sitzteil 3 und eine relativ zum Sitzteil 3 in ihrer Neigung einstellbare Lehne 4 auf. Zur Neigungseinstellung der Lehne 4 wird manuell, beispielsweise mittels eines Handrades 5, oder motorisch, beispielsweise mittels eines Elektromotors, eine Antriebswelle 7 gedreht, welche horizontal im Übergangsbereich zwischen Sitzteil 3 und Lehne 4 angeordnet ist. Auf beiden Seiten des Fahrzeugsitzes 1 greift die Antriebswelle 7 drehfest in jeweils einen Beschlag 10 ein. Die Antriebswelle 7 definiert die verwendeten Richtungsangaben eines Zylinderkoordinatensystems.

Der Beschlag 10 weist ein erstes Beschlagteil 11 und ein zweites Beschlagteil 12 auf, welche relativ zueinander verdrehbar sind. Die beiden Beschlagteile 11 und 12 lassen sich jeweils näherungsweise in eine kreisrunde Scheibenform einbeschreiben. Zur Aufnahme der axial wirkenden Kräfte, also zum Zusammenhalt der Beschlagteile 11 und 12, ist ein Umklammerungsring 13 vorgesehen. Ein solcher Zusammenhalt mittels eines Umklammerungsrings ist beispielsweise in der US 6,799,806 B2 beschrieben. Der vorzugsweise metallische Umklammerungsring 13 ist fest mit einem der beiden Beschlagteile 11 und 12 verbunden, vorliegend dem ersten Beschlagteil 11 in einem äußeren Randabschnitt, beispielsweise verschweißt oder (in Umfangsrichtung wenigstens teilweise) umgebördelt. Mittels eines radial nach innen weisenden Randes übergreift der Umklammerungsring 13, gegebenenfalls unter Zwischenlage eines separaten Gleitrings, das relativ zu ihm bewegliche, andere der beiden Beschlagteile 11 und 12 radial außen, ohne die Relativdrehung der beiden Beschlagteile 11 und 12 zu behindern. In baulicher Hinsicht bilden die beiden Beschlagteile 11 und 12 daher zusammen (mit dem Umklammerungsring 13) eine scheibenförmige Einheit.

Mit der Montage des Beschlags 10 ist das erste Beschlagteil 11 beispielsweise fest mit der Struktur der Lehne 4 verbunden, also lehnenteilfest. Das zweite Beschlagteil 12 ist dann fest mit der Struktur des Sitzteils 3 verbunden, also sitzteilfest. Die Zuordnungen der Beschlagteile 11 und 12 können jedoch auch vertauscht sein, d.h. das erste Beschlagteil 11 wäre dann sitzteilfest und das zweite Beschlagteil 12 lehnenfest. Der Beschlag 10 liegt also im Kraftfluss zwischen Lehne 4 und Sitzteil 3, weshalb die beide Beschlagteile 11 und 12 aus Metall bestehen, vorzugsweise aus Stahl.

Der Beschlag 10 ist als Getriebebeschlag ausgebildet, bei welchem das erste Beschlagteil 11 und das zweite Beschlagteil 12 mittels eines Getriebes zum Verstellen und Feststellen miteinander verbunden sind, genauer gesagt mittels eines - vorliegend selbsthemmenden - Exzenterumlaufgetriebes, wie es beispielsweise in der DE 44 36 101 A1 beschrieben ist.

Zur Ausbildung des Getriebes ist am zweiten Beschlagteil 12 ein außenverzahntes Zahnrad 16 und am ersten Beschlagteil 11 ein innenverzahnter Zahnkranz 17 ausgebildet, welche miteinander kämmen. Der Durchmesser des Kopfkreises der Außenverzahnung des Zahnrads 16 ist um wenigstens eine Zahnhöhe kleiner als der Durchmesser des Fußkreises der Innenverzahnung des Zahnkranzes 17. Ein entsprechender Unterschied der Zähneanzahl von Zahnrad 16 und Zahnkranz 17 von wenigstens einem Zahn ermöglicht eine Abwälzbewegung des Zahnkranzes 17 am Zahnrad 16. Die Ausbildung von Zahnrad 16 und Zahnkranz 17 erfolgt vorzugsweise mittels eines einzigen Präge-Stanz-Vorgangs, der zugleich die Beschlagteile 11 und 12 aus ihrem Ausgangsmaterial ausstanzt. Alternativ können die Beschlagteile 11 und 12 - mit ähnlichen Geometrien und gleichen Funktionen - durch Massivumformung (vorzugsweise Kaltfließpressen oder Warmfließpressen) hergestellt werden. Vorliegend bildet das Zahnrad 16 den radial äußeren Rand des zweiten Beschlagteils 12, d.h. das zweite Beschlagteil 12 schließt radial außen mit dem Zahnrad 16 ab.

Eines der beiden Beschlagteile 11 und 12 weist einen Kragen 19 auf, vorliegend das zweite Beschlagteil 12 konzentrisch zum Zahnrad 16. Der Kragen 19 kann als Kragenzug an dem besagten Beschlagteil angeformt (d.h. einstückig ausgebildet) oder als separate Hülse daran befestigt sein. Im Kragen 19 ist ein Mitnehmer 21 mittels einer Nabe 22 drehbar gelagert. Der Mitnehmer 21 besteht vorzugsweise aus Kunststoff. Die Nabe 22 des Mitnehmers 21 ist zentral mit einer Bohrung 23 zur Aufnahme der Antriebswelle 7 versehen. Das Profil der Bohrung 23 ist passend zum Profil der Antriebswelle 7, vorliegend einem Keilwellenprofil, ausgebildet. Im Anschluss an seine Nabe 22 weist der Mitnehmer 21 eine einstückig mit der Nabe 22 ausgebildete Abdeckscheibe 25 mit größerem Durchmesser als die Nabe 22 auf.

Auf dem Kragen 19 sind zwei Keilsegmente 27 - mit ihren gekrümmten Innenflächen - abgestützt, die - mit ihren gekrümmten Außenflächen - das andere der beiden Beschlagteile 11 und 12, vorliegend das erste Beschlagteil 11, lagern. Hiefür ist eine Aufnahme des letztgenannten Beschlagteils mit einer vorzugsweise drehfest eingepressten Gleitlagerbuchse 28 ausgekleidet, an der die Außenflächen der Keilsegmente 27 anliegen. Die Begriffe "abstützen" und "lagern" sollen nicht auf eine bestimmte Richtung des Kraftflusses durch den Beschlag 10 beschränkt sein, da diese Richtung von der Montage des Beschlags 10 abhängt.

Der Mitnehmer 21 weist - radial beabstandet zur Nabe 22 - ein mit Spiel zwischen die Schmalseiten der Keilsegmente 27 fassendes Mitnehmersegment 29 auf, welches mit der Abdeckscheibe 25 und mit der Nabe 22 einstückig ausgebildet ist. Die Keilsegmente 27, deren Breitseiten einander zugekehrt sind, nehmen, beispielsweise mit je einer Öffnung oder einer durch vorspringende Materialpartien definierten Ausnehmung, jeweils einen abgewinkelten Endfinger 35a einer Omega-förmigen Feder 35 auf. Die Feder 35 beaufschlagt die Keilsegmente 27 in Umfangsrichtung, insbesondere um sie auseinander zu drücken, wobei im Betrieb die Breitseiten der Keilsegmente 27 einander berühren und beaufschlagen können.

Der Mitnehmer 21 wird auf der Außenseite des den Kragen 19 aufweisenden Beschlagteils durch einen vorzugsweise aufgeclipsten Sicherungsring 43 axial gesichert. Der Sicherungsrings 43 erstreckt sich in axialer Richtung entlang eines Teiles der Nabe 22, so dass die Nabe 22 nicht direkt an der Innenseite des Kragens 19 anliegt, sondern unter Zwischenlage des Sicherungsrings 43 im Kragen 19 gelagert ist (und dadurch der Mitnehmer 21 am zweiten Beschlagteil 12 gelagert ist). Auf der Außenseite des die Gleitlagerbuchse 28 aufweisenden Beschlagteils (vorliegend des ersten Beschlagteils 11) ist zwischen dessen radial äußerem Rand und der Abdeckscheibe 25 ein Dichtring 44 vorgesehen, beispielsweise aus Gummi oder weichem Kunststoff, der mit der Abdeckscheibe 25 verbunden ist, insbesondere verclipst ist.

Durch die Keilsegmente 27 (und die Feder 35) wird ein Exzenter definiert, welcher in Verlängerung der Richtung der Exzentrizität das Zahnrad 16 an einer Eingriffsstelle in den Zahnkranz 17 drückt. Bei einem Antrieb durch die sich (mehrfach) drehende Antriebswelle 7 wird ein Drehmoment zunächst auf den Mitnehmer 21 und mittels des Mitnehmersegments 29 dann auf den so definierten Exzenter übertragen, welcher entlang der Gleitlagerbuchse 28 gleitet unter Verlagerung der Richtung der Exzentrizität und damit unter Verlagerung der Eingriffsstelle des Zahnrades 16 im Zahnkranz 17, was sich als taumelnde Abwälzbewegung darstellt, d.h. als Relativdrehung mit überlagerter Taumelbewegung. Die Neigung der Lehne 4 ist dadurch zwischen mehreren Gebrauchsstellungen stufenlos einstellbar.

Zur Verbesserung des dynamischen Betriebsverhaltens ist vorzugsweise noch als Sperrelement eine Sperrfeder 51 vorgesehen, wie sie beispielsweise in der DE 195 48 809 C1 offenbart ist. Die Sperrfeder 51 wirkt vorliegend mit einer Verzahnung 55 zusammen, die als weiterer Zahnkranz am ersten Beschlagteil 11 ausgebildet ist. Die Sperrfeder 51 sperrt jeweils die Keilsegmente 27 im nicht-angetriebenen Zustand (indem die Sperrfeder 51 mittels Anlage an die Endfinger 35a die Feder 35 sperrt) und wird durch den angetriebenen Mitnehmer 21 gelöst.

Eine abgewandelte Ausbildung des Mitnehmers 21 ist in den motorischen Varianten vorgesehen, wie sie in der US 7,314,250 B 1 für einen metallischen, einteiligen Mitnehmer, beispielsweise aus Zink- oder Aluminiumdruckguss, und in der US 2009/0127910 A1 für einen zweiteiligen Mitnehmer aus einem metallischen Ring (vorzugsweise ein Sintermaterial) mit Mitnehmersegment 29 und einem damit drehfest verbundenen Kunststoffbauteil mit Nabe 22 und Abdeckscheibe 25 beschrieben ist. Einen abgewandelten zweiteiligen Mitnehmer zeigt die US 6,619,743 B1, wonach auf dessen Ring die Keilsegmente gelagert sind. Der diesbezügliche Offenbarungsgehalt der drei genannten Druckschriften wird ausdrücklich einbezogen.

Jedes der Keilsegmente 27 weist außer der Breitseite und der Schmalseite, die jeweils (entgegengesetzt) in Umfangsrichtung weisen, sowie der konvex gekrümmten Außenfläche 27a und der konkav gekrümmten Innenfläche 27i, die jeweils (entgegengesetzt) in radialer Richtung weisen, noch die beiden (entgegengesetzt) in axialer Richtung weisenden Seitenflächen 27s auf, welche die gekrümmte Keilform haben. Das Keilsegment 27 weist ein Loch 27h zur Aufnahme des Endfingers 35a auf. Die beiden Seitenflächen 27s sind mittels der Wand des Loches 27h miteinander verbunden. Der (maximale) axiale Abstand der beiden Seitenflächen 27s voneinander sei als Abstand a bezeichnet. Die (minimale) axiale Abmessung der Innenfläche 27i sei als Breite b bezeichnet. Die beiden Seitenflächen 27s eines jeden Keilsegmentes 27 sind vorzugsweise spiegelbildlich zueinander aufgebaut, so dass nachfolgend nur eine der beiden Seitenflächen 27s und ihre Nachbarschaft beschrieben ist.

Die Seitenfläche 27s weist eine inselförmige Eindrückung 27e auf, welche zum optimalen Verdichten des mittels Sintern hergestellten Keilsegments 27 notwendig ist. Die Eindrückungen 27e können beispielsweise 0,35 mm ± 20 % tief sein bei einer Abmessung des Keilsegments 27 von beispielsweise 6,0 mm ± 20 % in axialer Richtung. Der Übergangsbereich zwischen der Seitenfläche 27s und der Eindrückung 27e kann schräg verlaufen, beispielsweise in einem Winkel von 30° ± 20%.

Als Übergangsbereich zwischen der Seitenfläche 27s einerseits und der Innenfläche 27i andererseits ist am Keilsegment 27 - anstelle einer Kante - eine Fase 27f vorgesehen. Die Fase 27f reduziert die lokale axiale Abmessung des Keilsegments 27 (d.h. den in axialer Richtung bei gleichen Koordinaten in Umfangs- und radialer Richtung gemessenen Abstand der beiden äußersten Ränder des Materials) vom Abstand a auf die Breite b, vorzugsweise etwa um 5 % bis 20 %. In radialer Richtung erstreckt sich die Fase 27f um vorzugweise bis zu 1/3 der radialen Abmessung des Keilsegments 27. Die Fase 27f ist ihrer Form nach vorzugsweise ein Teil einer Mantelfläche eines Zylinders, der schräg zum Kragen 19 steht. Die Fase 27f verläuft beispielsweise in einem Winkel von 20° ± 20 % zu Seitenfläche 27s. Die Fase 27f ist in Umfangsrichtung nicht durchgehend gleichförmig ausgebildet, sondern sichelförmig, d.h. entlang der Umfangsrichtung betrachtet ist die Fase 27f in der Mitte breiter (d.h. mit einer größeren Abmessung in radialer Richtung versehen) als an den beiden Enden, ragt also in ihrer Mitte weiter in die Seitenfläche 27s und die Innenfläche 27i hinein als in ihren Enden im Übergangsbereich zur Breitseite und zur Schmalseite, wo die Fase 27f nahezu verschwindet. So reicht die Fase 27f auf der Seitenfläche 27s beinahe bis zur Eindrückung 27e heran. Aus geometrischen Gründen (weil ansonsten die Breite b der Innenfläche 27i zu stark reduziert wird) schließt die Fase 27f vorzugsweise mit einer kleinen (sichelförmigen) Stufe 27d an die Innenfläche 27i an. Diese Stufe 27d ist von deutlich geringerer Abmessung als die Fase 27f, beispielsweise 0,4 mm ± 20 % in der Mitte. Die Stufe 27d ist in axialer Richtung parallel zur Seitenfläche 27s versetzt angeordnet, beispielsweise 0,4 mm ± 20 % tiefer als die Seitenfläche 27s.

In abgewandelter Ausführung ist die Fase 27f alternativ oder kummulativ zwischen der Seitenfläche 27s einerseits und der Außenfläche 27a andererseits vorgesehen. In einer weiteren Abwandlung ist die Fase 27f nur an einer der beiden Seitenflächen 27s vorgesehen (was die Symmetrie des Keilsegmentes bricht). In weiteren Abwandlungen ist nur die Stufe 27d und keine Fase 27f vorgesehen.

### Bezugszeichenliste

- 1: Fahrzeugsitz
- 3: Sitzteil
- 4: Lehne
- 5: Handrad
- 7: Antriebswelle
- 10: Beschlag
- 11: erstes Beschlagteil
- 12: zweites Beschlagteil
- 13: Umklammerungsring
- 16: Zahnrad
- 17: Zahnkranz
- 19: Kragen
- 21: Mitnehmer
- 22: Nabe
- 23: Bohrung
- 25: Abdeckscheibe
- 27: Keilsegment
- 27a: Außenfläche
- 27d: Stufe
- 27e: Eindrückung
- 27f: Fase
- 27h: Loch
- 27i: Innenfläche
- 27s: Seitenfläche
- 28: Gleitlagerbuchse
- 29: Mitnehmersegment
- 35: Feder
- 35a: Endfinger
- 43: Sicherungsring
- 44: Dichtring
- 51: Sperrfeder
- 55: Verzahnung
- a: Abstand (der Seitenflächen)
- b: Breite (der Innen-/Außenfläche)

## Patentansprüche

1. Beschlag für einen Fahrzeugsitz, insbesondere für einen Kraftfahrzeugsitz, mit einem ersten Beschlagteil (11), an welchem ein Zahnkranz (17) ausgebildet ist, einem zweiten Beschlagteil (12), an welchem ein Zahnrad (16) ausgebildet ist, welches mit dem Zahnkranz (17) kämmt, wodurch die beiden Beschlagteile (11, 12) miteinander in Getriebeverbindung stehen, und einem drehbar gelagerten, von einem Mitnehmer (21) angetriebenen, in Umfangsrichtung umlaufenden Exzenter (27, 27) zum Antrieb einer relativen Abwälzbewegung von Zahnrad (16) und Zahnkranz (17), wobei der Exzenter (27, 27) zwei Keilsegmente (27) aufweist, welche jeweils eine konvex gekrümmte, radial nach auβen weisende Außenfläche (27a), eine konkav gekrümmte, radial nach innen weisende Innenfläche (27i) und zwei Seitenflächen (27s) aufweisen, wobei in axialer Richtung die Seitenflächen (27s) einen Abstand (a) voneinander und die Innenfläche (27i) und/oder Außenfläche (27a) eine Breite (b) als Abmessung aufweisen, wobei die Breite (b) kleiner ist als der Abstand (a) und zwischen wenigstens einer der beiden Seitenflächen (27s) einerseits und der Innenfläche (27i) oder der Außenfläche (27a) ein Übergangsbereich (27f, 27d) vorgesehen ist, welcher die lokale axiale Abmessung des jeweiligen Keilsegments (27) vom Abstand (a) auf die Breite (b) reduziert, **dadurch gekennzeichnet, dass** der Übergangsbereich (27f, 27d) als Fase (27f) ausgebildet ist und dass die Fase (27f) entlang der Umfangsrichtung ungleichförmig ausgebildet ist.

2. Beschlag nach Anspruch 1, **dadurch gekennzeichnet, dass** die Fase (27f) sichelförmig ausgebildet ist, indem sie in der Mitte in radialer Richtung eine größere Abmessung aufweist als an den beiden Enden.

3. Beschlag nach Anspruch 1 oder 2, **dadurch gekennzeichnet, dass** der Abstand (a) der beiden Seitenflächen (27s) in axialer Richtung 6,0 mm ± 20 % beträgt.

4. Beschlag nach einem der vorhergehenden Ansprüche, **dadurch gekennzeichnet, dass** die Breite (b) der Innenfläche (27i) oder der Außenfläche (27a) in axialer Richtung 5,2 mm ± 20 % beträgt.

5. Beschlag nach einem der vorhergehenden Ansprüche, **dadurch gekennzeichnet, dass** die Fase (27f) die axiale Abmessung des jeweiligen Keilsegments (27) vom Abstand (a) lokal um 5 % - 20 % auf die Breite (b) reduziert.

6. Beschlag nach einem der vorhergehenden Ansprüche, **dadurch gekennzeichnet, dass** die Fase (27f) in einem Winkel von 20° ± 20 % zur Seitenfläche (27s) verläuft.

7. Beschlag nach einem der einem der vorhergehenden Ansprüche, **dadurch gekennzeichnet, dass** die Fase (27f) mit einer kleinen Stufe (27d) zur Innenfläche (27i) und/oder Außenfläche (27a) übergeht, insbesondere dass die Stufe (27d) in axialer und/oder radialer Richtung eine Abmessung von bis zu 0,4 mm ± 20 % aufweist und/oder in axialer Richtung parallel versetzt zur Seitenfläche (27s) angeordnet ist.

8. Beschlag nach einem der vorhergehenden Ansprüche, **dadurch gekennzeichnet, dass** eine Feder (35) die Keilsegmente (27) in Umfangsrichtung beaufschlagt, und/oder dass die Feder (35) mittels zweier Endfinger (35a) in die Keilsegmente (27) eingreift, und/oder dass die Keilsegmente (27) zur Aufnahme der Endfinger (35a) insbesondere jeweils ein Loch (27h) aufweisen, und/oder dass jedes Keilsegment (27) eine dem anderen Keilsegment (27) zugekehrte Breitseite und eine von der Breitseite abgewandten Schmalseite aufweist.

9. Beschlag nach einem der vorhergehenden Ansprüche, **dadurch gekennzeichnet, dass** ein Umklammerungsring (13) das erste Beschlagteil (11) und das zweite Beschlagteil (12) axial zusammenhält unter Bildung einer scheibenförmigen Einheit, welcher am ersten Beschlagteil (11) befestigt ist und das zweite Beschlagteil (12) radial außen übergreift und insbesondere eine im wesentlichen flache Form aufweist, und/oder dass das erste Beschlagteil (11) den Exzenter (27, 27) aufnimmt, insbesondere mittels einer zum Zahnkranz (17) konzentrischen Gleitlagerbuchse (28), und/oder dass das zweite Beschlagteil (12) den Exzenter (27, 27) abstützt, insbesondere mittels eines zum Zahnrad (16) konzentrischen Kragens (19),

10. Fahrzeugsitz, insbesondere Kraftfahrzeugsitz, mit wenigstens einem Beschlag nach einem der vorhergehenden Ansprüche, einem Sitzteil (3), welches mit einem der beiden Beschlagteile (11, 12) verbunden ist, und einer Lehne (4), welche mit dem anderen den beiden Beschlagteile (11, 12) verbunden ist.

## Claims

1. Fitting for a vehicle seat, in particular for a motor vehicle seat, with a first fitting part (11) on which a toothed ring (17) is formed, a second fitting part (12) on which a gearwheel (16) is formed, said gearwheel meshing with the toothed ring (17), as a result of which the two fitting parts (11, 12) are in geared connection with each other, and a rotatably mounted eccentric (27, 27) which is driven by a driver (21), revolves in the circumferential direction and is intended for driving a relative rolling movement of gearwheel (16) and toothed ring (17), wherein the eccentric (27, 27) has two wedge segments (27) which each have a convexly curved, radially outwardly facing outer surface (27a), a concavely curved, radially inwardly facing inner surface (27i) and two side surfaces (27s), wherein, in the axial direction, the side surfaces (27s) are at a distance (a) from each other and the inner surface (27i) and/or outer surface (27a) have a width (b) as a size, wherein the width (b) is smaller than the distance (a), and a transition region (27f, 27d) is provided between at least one of the two side surfaces (27s), on the one hand, and the inner surface (27i) or the outer surface (27a), said transition region reducing the local axial size of the respective wedge segment (27) from the distance (a) to the width (b), **characterized in that** the transition region (27f, 27d) is designed as a bevel (27f), and **in that** the bevel (27f) is formed non-uniformly in the circumferential direction.

2. Fitting according to Claim 1, **characterized in that** the bevel (27f) is formed in a crescentshaped manner by having a greater size in the centre in the radial direction than at the two ends.

3. Fitting according to Claim 1 or 2, **characterized in that** the distance (a) between the two side surfaces (27s) in the axial direction is 6.0 mm ± 20%.

4. Fitting according to one of the preceding claims, **characterized in that** the width (b) of the inner surface (27i) or of the outer surface (27a) in the axial direction is 5.2 mm ± 20%.

5. Fitting according to one of the preceding claims, **characterized in that** the bevel (27f) reduces the axial size of the respective wedge segment (27) locally by 5% - 20% from distance (a) to the width (b).

6. Fitting according to one of the preceding claims, **characterized in that** the bevel (27f) runs at an angle of 20° ± 20% with respect to the side surface (27s).

7. Fitting according to one of the preceding claims, **characterized in that** the bevel (27f) merges with respect to the inner surface (27i) and/or outer surface (27a) with a small step (27d), in particular **in that** the step (27d) has a size of up to 0.4 mm ± 20% in the axial and/or radial direction, and/or is arranged offset parallel to the side surface (27s) in the axial direction.

8. Fitting according to one of the preceding claims, **characterized in that** a spring (35) acts upon the wedge segments (27) in the circumferential direction, and/or **in that** the spring (35) engages in the wedge segments (27) by means of two end fingers (35a), and/or **in that**, in order to receive the end fingers (35a), the wedge segments (27) in particular each have a hole (27h), and/or **in that** each wedge segment (27) has a wide side facing the other wedge segment (27) and a narrow side facing away from the wide side.

9. Fitting according to one of the preceding claims, **characterized in that** a clasp ring (13) holds the first fitting part (11) and the second fitting part (12) together axially, forming a disc-shaped unit, said clasp ring being fastened to the first fitting part (11) and engaging radially on the outside over the second fitting part (12) and, in particular, having a substantially flat shape, and/or **in that** the first fitting part (11) accommodates the eccentric (27, 27), in particular by means of a plain bearing bushing (28) which is concentric with respect to the toothed ring (17), and/or **in that** the second fitting part (12) supports the eccentric (27, 27), in particular by means of a collar (19) which is concentric with respect to the gearwheel (16).

10. Vehicle seat, in particular motor vehicle seat, with at least one fitting according to one of the preceding claims, a seat part (3) which is connected to one of the two fitting parts (11, 12), and a backrest (4) which is connected to the other of the two fitting parts (11, 12).

## Revendications

1. Ferrure pour un siège de véhicule, en particulier pour un siège de véhicule automobile, comprenant une première partie de ferrure (11) sur laquelle est réalisée une couronne dentée (17), une deuxième partie de ferrure (12) sur laquelle est réalisée une roue dentée (16), laquelle s'engrène avec la couronne dentée (17), de telle sorte que les deux parties de ferrure (11, 12) soient en liaison par engrenage l'une avec l'autre, et un excentrique (27, 27) monté à rotation, entraîné par un élément d'entraînement (21) et tournant dans la direction périphérique pour l'entraînement d'un déplacement relatif de roulement de la roue dentée (16) et de la couronne dentée (17), l'excentrique (27, 27) comprenant deux segments de coin (27), lesquels comprennent respectivement une surface extérieure (27a) de courbure convexe et tournée radialement vers l'extérieur, une surface intérieure (27i) de courbure concave et tournée radialement vers l'intérieur et deux surfaces latérales (27s), les surfaces latérales (27s) présentant dans la direction axiale une distance (a) l'une par rapport à l'autre et la surface intérieure (27i) et/ou la surface extérieure (27a) présentant en tant que dimension une largeur (b), la largeur (b) étant inférieure à la distance (a), et une région de transition (27f, 27d) étant prévue entre au moins l'une des deux surfaces latérales (27s) d'une part et la surface intérieure (27i) ou la surface extérieure (27a), laquelle région de transition réduit la dimension axiale locale du segment de coin (27) respectif de la distance (a) à la largeur (b), **caractérisée en ce que** la région de transition (27f, 27d) est réalisée sous forme de biseau (27f) et **en ce que** le biseau (27f) est réalisé de manière irrégulière le long de la direction périphérique.

2. Ferrure selon la revendication 1, **caractérisée en ce que** le biseau (27f) est réalisé en forme de croissant, par le fait qu'il présente une plus grande dimension au centre dans la direction radiale qu'aux deux extrémités.

3. Ferrure selon la revendication 1 ou 2, **caractérisée en ce que** la distance (a) entre les deux surfaces latérales (27s) dans la direction axiale vaut 6,0 mm ± 20%.

4. Ferrure selon l'une quelconque des revendications précédentes, **caractérisée en ce que** la largeur (b) de la surface intérieure (27i) ou de la surface extérieure (27a) dans la direction axiale vaut 5,2 mm ± 20%.

5. Ferrure selon l'une quelconque des revendications précédentes, **caractérisée en ce que** le biseau (27f) réduit la dimension axiale du segment de coin (27) respectif localement de 5 % à 20 % de la distance (a) à la largeur (b).

6. Ferrure selon l'une quelconque des revendications précédentes, **caractérisée en ce que** le biseau (27f) s'étend suivant un angle de 20° ± 20 % par rapport à la surface latérale (27s).

7. Ferrure selon l'une quelconque des revendications précédentes, **caractérisée en ce que** le biseau (27f) se prolonge par un petit gradin (27d) par rapport à la surface intérieure (27i) et/ou la surface extérieure (27a), en particulier **en ce que** le gradin (27d) présente dans la direction axiale et/ou radiale une dimension de jusqu'à 0,4 mm ± 20% et/ou est disposé de manière décalée parallèlement par rapport à la surface latérale (27s) dans la direction axiale.

8. Ferrure selon l'une quelconque des revendications précédentes, **caractérisée en ce qu'**un ressort (35) sollicite les segments de coin (27) dans la direction périphérique, et/ou **en ce que** le ressort (35) vient en prise dans les segments de coin (27) au moyen de deux doigts d'extrémité (35a), et/ou en ce que les segments de coin (27) comprennent en particulier respectivement un trou (27h) pour recevoir les doigts d'extrémité (35a), et/ou **en ce que** chaque segment de coin (27) comprend un côté large tourné vers l'autre segment de coin (27) et un côté étroit opposé au côté large.

9. Ferrure selon l'une quelconque des revendications précédentes, **caractérisée en ce qu'**une bague de serrage (13) maintient axialement ensemble la première partie de ferrure (11) et la deuxième partie de ferrure (12) en formant une unité en forme de disque, laquelle est fixée à la première partie de ferrure (11) et vient en prise radialement à l'extérieur sur la deuxième partie de ferrure (12) et présente en particulier une forme essentiellement plate, et/ou **en ce que** la première partie de ferrure (11) reçoit l'excentrique (27, 27), en particulier au moyen d'une douille de palier lisse (28) concentrique à la couronne dentée (17), et/ou **en ce que** la deuxième partie de ferrure (12) supporte l'excentrique (27, 27), en particulier au moyen d'un collet (19) concentrique à la roue dentée (16).

10. Siège de véhicule, en particulier siège de véhicule automobile, comprenant au moins une ferrure selon l'une quelconque des revendications précédentes, une partie d'assise (3), laquelle est reliée à l'une des deux parties de ferrure (11, 12), et un dossier (4), lequel est relié à l'autre des deux parties de ferrure (11, 12).
